Europäisches Patentamt

European Patent Office

Office européen des brevets

(19)

(11) Veröffentlichungsnummer: **0 144 961 B1**

(12) **EUROPÄISCHE PATENTSCHRIFT**

(45) Veröffentlichungstag der Patentschrift: 04.09.91

(51) Int. Cl.5: **B65D 81/12**, C08J 9/16

(21) Anmeldenummer: 84114721.8

(22) Anmeldetag: 04.12.84

(54) **Aufschäumbares Kunststoffgranulat und daraus hergestelltes Packmaterial.**

(30) Priorität: 10.12.83 DE 3344685
27.09.84 DE 3435440

(43) Veröffentlichungstag der Anmeldung:
19.06.85 Patentblatt 85/25

(45) Bekanntmachung des Hinweises auf die
Patenterteilung:
04.09.91 Patentblatt 91/36

(84) Benannte Vertragsstaaten:
AT BE CH DE FR GB IT LI NL SE

(56) Entgegenhaltungen:
EP-A- 11 215        EP-A- 0 011 215
EP-A- 0 041 431     DE-A- 3 435 440
GB-A- 1 400 518     US-A- 3 400 037

(73) Patentinhaber: SHELL INTERNATIONALE RE-
SEARCH MAATSCHAPPIJ B.V.
Carel van Bylandtlaan 30
NL-2596 HR Den Haag(NL)

(72) Erfinder: Kohaut, Günter
Am Eichkopf 18
W-6240 Königstein/Taunus(DE)
Erfinder: Weber, Werner, Dr.
Waldstrasse 127
W-6085 Nauheim(DE)
Erfinder: Groenendijk, Herman
Voltastraat 7
NL-4904 HL Oosterhout(NL)
Erfinder: Poppelaars, Adrianus Cornelis
Loopschansstraat 71
NL-4817 KS Breda(NL)
Erfinder: Janssen, Wilhelmus Henrikus Johannes
Wilderen 70
NL-4817 VG Breda(NL)

(74) Vertreter: Tuijn, Jan Warnaar et al
Shell Internationale Research Maatschappij
B.V., Patents, Licensing & Trade Marks Division, P.O. Box 302
NL-2501 CH The Hague(NL)

**Beschreibung**

Pack- oder Füllmaterialien aus losen aufgeschäumten Kunststoffteilchen sind bekannt und werden in grossen Mengen eingesetzt. Massgebend dafür sind vor allem ihre Staubfreiheit, die Widerstandsfähigkeit gegen Feuchtigkeit und Schimmelbildung, die Abriebfestigkeit und ihr inertes Verhalten gegenüber dem Verpackungsgut sowie ihr geringes Gewicht. Üblicherweise werden solche Kunststoffteilchen als kompakte, treibmittelhaltige, nichtaufgeschäumte Granulate zur Verfügung gestellt und erst im Verpackungsbetrieb nach bekannten Verfahren zur endgültigen Form aufgeschäumt.

Die Wirkung der geschäumten Kunststoffteilchen als Packmaterial beruht darauf, dass sie nach dem Einbetten des Verpackungsgutes sich gegenseitig verhaken bzw. verzahnen und zudem ein grosses Hohlraumvolumen einschliessen. Das Hohlraumvolumen ist dabei das von den Teilchen eingeschlossene, aber nicht ausgefüllte Volumen bei der Schüttung zum Haufwerk. Dadurch wird eine Art "federnde Hülle" um das Gut gebildet. Die gegenseitige Verzahnung bei gleichzeitiger Bildung eines Grossen Hohlraumvolumens ist besonders wichtig, um das "Wandern" des verpackten Gegenstandes durch die Packmittelteilchen infolge der Transporterschütterung zu verhindern und eine optimale bleibende "Federwirkung" zu erreichen.

Im Gegensatz zu der Fähigkeit, sich mit anderen Teilchen zu verzahnen und dabei ein grosses Hohlraumvolumen zu bilden, steht die Forderung, dass die das Packmaterial bildenden Teilchen zugleich auch eine gute Rieselfähigkeit aufweisen. Die leichten, geschäumten Kunststoffteilchen werden nämlich üblicherweise aus Vorratsilos in freiem Fall in die jeweiligen Packbehältnisse eingebracht. Dazu ist eine einwandfreie Rieselfähigkeit der Teilchen Voraussetzung, da andernfalls durch Verhaken der Teilchen eine "Brückenbildung" im Vorratsbunker stattfindet und das gleichmässige Ausfliessen und damit die Mengendosierung der Teilchen gestört oder verhindert wird. Besonders bei vollautomatischen Verpackungsanlagen führt dies zu empfindlichen Störungen.

Man hat versucht, durch bestimmte Formgebung der geschäumten Kunststoffteilchen diese sich widersprechenden Anforderungen an das Packmaterial zu erfüllen, also bei grossem Hohlraumvolumen und guter Verhakung oder Verzahnung der Teilchen im Verpackungsbehältnis zugleich eine gute Rieselfähigkeit bei der Entnahme aus dem Vorratsbehälter zu erreichen. Als Beispiele für die Form der Teilchen seien genannt: S-Form, Y-Form, Sternform, gewellte längliche oder runde Blättchen, Ringe, aufgeschlitzte Ringe, 8-förmige Hohlkörper, spiralige Körper, Teilchen in der Form von Kartoffel-Chips, Halbkugeln, sattelförmige Teilchen, hantelförmige Teilchen und Flocken.

Aus der US-A- 3400037 ist ein Verfahren zur Herstellung gebogener Schaumstoffscheiben bekannt, die sich ineinander verhaken und eine Fixierung von Verpackungskörpern gewährleisten. Bei diesem Verfahren werden treibmittelhaltige thermoplastische Kunststoffe stranggepresst und unmittelbar danach aufgeschäumt. Die geschäumten Stränge werden in Scheiben zerschnitten, die einem weiteren Schäumvorgang unterworfen werden, wobei sie sich z.B. sattelförmig verbiegen können. Der Treibmittelhaltige Kunststoff wird durch eine einfache, kreisförmige oder nicht-kreisförmige Austrittsöffnung zu einem kontinuierlichen, nicht-expandierten, runden Strang stranggepresst, wobei die zwangsläufig auftretende Expansion des Stranges unmittelbar nach Austritt aus der Austrittsöffnung auf einen Durchmesser grösser als die Austrittsöffnung durch gleichzeitige Abkühlung des Stranges begrenzt, aber nicht verhindert, wird. Der Strang wird darauf in noch flexiblem Zustand durch eine Abzugvorrichtung von der Austrittsöffnung abgezogen und einer Schneidevorrichtung zugeführt. Der Strang wird hier kontinuierlich in etwa 1,6 mm dicke, flache Scheibchen geschnitten, die später durch Heissbehandlung z.B. zu gebogener Scheiben hyperbolisch paraboloider Form aufgeschäumt werden. Wegen des gleichzeitigen Aufschäumens kann das Strangpressen nur verhältnismässig langsam durchgeführt werden; die Lagerung und der Transport zur Endverarbeitung ist wegen des grossen Volumens der teilgeschäumten Scheiben sehr aufwendig.

Aus der GB-A-1,400,518 ist ein Verfahren zur Herstellung expandierbarer Styrolpolymerisate bekannt, wobei man treibmittelhaltige Styrolpolymerisate strangpresst, die erhaltenen zylindrischen Stränge so rasch abkühlt, dass sie nicht aufschäumen, und dann zerkleinert. Gemäss diesem Verfahren verformt man die zylindrischen Stränge bei 70° bis 90 °C durch Walzen zu Strängen mit ovalen Querschnitt und zerschneidet sie in Richtung der kleinen Achse des ovalen Strangquerschnitts in Scheiben. Die ovalen Scheiben krümmen sich je nach Dicke der Scheiben beim Schäumen oder auch schon vorher aufgrund innerer Spannungen nach entgegengesetzten Seiten, so dass sattelförmige Körper entstehen. Die Scheiben haben eine Dicke von z.B. 1 oder 1,5 mm. Dieses Verfahren führt zu einem schüttfähigen oder rieselfähigen Polstermaterial und es ist rüttelfest, da das Verkrümmen der Scheibchen zu sattelförmigen Körpern führt, die sich bei Druckbelastung ineinander verhaken und eine Fixierung von Verpackungskörpern gewährleisten.

Aus der EP-A-11215 ist ein freifliessendes Packmaterial aus geschäumten Kunststoffteilchen in Sternform mit drei in einer Ebene liegenden Schenkeln bekannt. Diese Teilchen weisen ganz bestimmten

EP 0 144 961 B1

Verhältnisse von Höhe zu Dicke und Breite auf: Sie besitzen ein Verhältnis der Teilchendicke zur Teilchenhöhe von 1:2,75 bis 1:3,3 und ein Verhältnis der Schenkelbreite zur Teilchenhöhe von 1:2,2 bis 1:2,5, wobei die Höhe 10 bis 60 mm beträgt. Demgemäss liegt die Wanddicke der Teilchen zwischen 3,0 und 21,8 mm. Zur Herstellung des Verpackungsmaterials wird zunächst durch Aufschmelzen des Kunststoffes in einer Strangpresse, Eindosieren eines Treibmittels unter Druck in die Kunststoffschmelze und Auspressen der treibmittelhaltigen Schmelze durch eine entsprechende Formöffnung und Granulieren ein kompaktes Granulat hergestellt. Um ein Aufschäumen bei der Extrusion zu verhindern, werden die aus der Strangpresse austretenden Stränge rasch durch ein Wasserbad abgekühlt. Anschliessend werden die gekühlten Stränge senkrecht zur Abzugsrichtung in Teilchen einer solchen Dicke geschnitten, dass nach dem Aufschäumen bei den Teilchen das obenangegebene Verhältnis von Dicke zu Höhe erfüllt ist. Diese Teilchen erfüllen die Forderung nach Rieselfähigkeit und Verzahnungsfähigkeit besonders gut und sind sternförmigen Teilchen anderer Abmessung in der Kombination von Rieselfähigkeit und Verzahnungsfähigkeit überlegen.

Die vorstehend genannten Teilchenformen zeigen zwar häufig zufriedenstellende Verzahnungseigenschaften bei annehmbarer Rieseleigenschaft, jedoch bleibt das für das Packverhalten wesentliche Hohlraumvolumen unter der erwünschten Grösse.

Aufgabe der Erfindung war es daher, ein verschäumbares Kunststoffgranulat bereitzustellen, das nach dem Aufschäumen ein Packmaterial ergibt, das eine gute Rieselfähigkeit, eine gute Verzahnungseigenschaft und zugleich ein grosses Hohlraumvolumen der Schüttung aufweist.

Zur Lösung dieser Aufgabe schlägt die Erfindung ein Kunststoffgranulat aus verschäumbaren Teilchen in Sternform vor, das dadurch gekennzeichnet ist, dass es überwiegend aus Teilchen besteht, die sich von einem sternförmigen Grundkörper mit drei Schenkeln ableiten, wobei zwei Schenkelflächen paraboloid gegeneinander gekrümmt sind, während der dritte Schenkel eine dazu entgegengesetzte paraboloide Krümmung seiner Fläche aufweist, wodurch in jedem dieser Fälle ein räumlich in sich verwölbtes Gebilde entsteht, dessen paraboloide Krümmungsflächen zueinander versetzt stehen, dass die Wanddicke (D) der Teilchen 1,0 bis 2,5 mm beträgt, dass die Teilcheinbreite (Maß A) 8 bis 10 mm, die Teilchenköhe (Maß B) 5 bis 7 mm und die Teilchendicke (Maß C) 4 bis 5 mm betragen, und daß das Verhältnis von (D) zu (A) 1:4 bis 1:10, das Verhältnis von (D) zu (B) 1:2,5 bis 1:7 und das Verhältnis von (D) zu (C) 1:2 bis 1:5 betragt.

Die Erfindung betrifft weiterhin in sich verwölbten Kunststoffteilchen, erhalten durch Verschäumen des Kunststoffgranulats gemäss der Erfindung.

Die Teilchen des erfindungsgemässen verschäumbaren Kunststoffgranulats sind überwiegend, vorzugsweise zu mehr als 9 %, insbesondere zu mehr als 95 % in sich verwölbt. Dabei sind bei den erfindungsgemässen dreischenkeligen Granulatteilchen die Schenkel (2), (3) und (4) gemäss Figur (1) bereits gegeneinander in der Weise räumlich gekrümmt, wie sie dann auch bei den durch Aufschäumen erhaltenen Packmaterialkörpern auftritt, wenngleich die Verwölbung zumeist noch nicht so ausgeprägt ist.

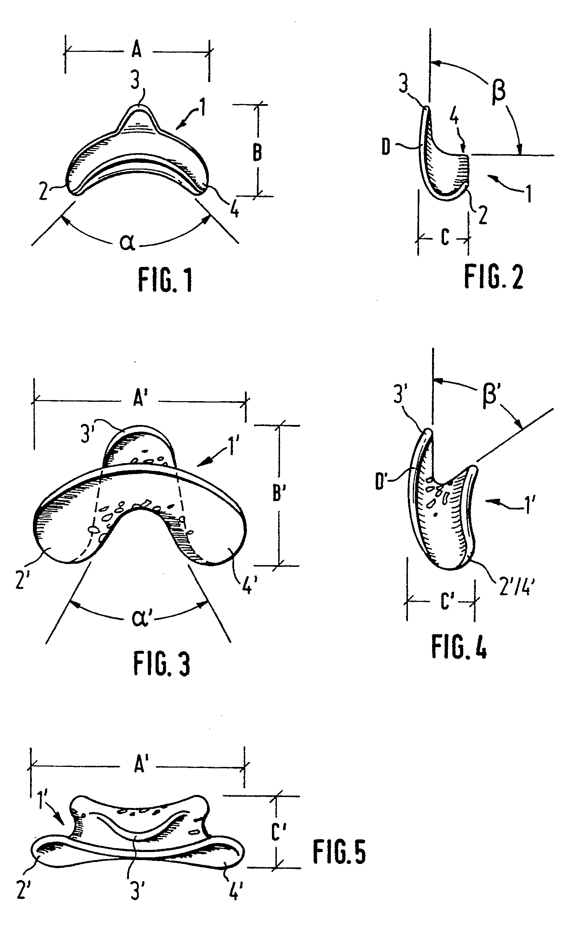

Die Masse (A), (B), und (C) der Granulatteilchen (vgl. Figuren 1 und 2) betragen 8 bis 10 mm (A), 5 bis 7 mm (B) und 4 bis 5 mm (C). Der Winkel $\alpha$ zwischen den Schenkeln 2 und 4 (Fig. 1) bewegt sich zweckmässigerweise zwischen 90 und 170°, vorzugsweise 120 und 170°, während der Winkel $\beta$ zwischen den Schenkeln 3 und 2/4 (Figur 2) zumeist zwischen 60 und 160°, vorzugsweise zwischen 80 und 120° liegt.

Erfindungsgemäß beträgt das Verhältnis von (D) zu (A) 1:4 bis 1:10, das Verhältnis von (D) zu (B) 1:2,5 bis 1:7, das Verhältnis (D) zu (C) 1:2,0 bis 1:5, das Verhältnis (C) zu (A) 1:0,75 bis 1:4, vorzugsweise 1:1,6 bis 1:2,5, das Verhältnis (C) zu (B) 1:0,5 bis 1:2,7, vorzugsweise 1:1,0 bis 1:1,8, das Verhältnis (B) zu (A) 1:0,75 bis 1:3, vorzugsweise 1:0,87 bis 1:2 und das Verhältnis (C):(B):(A) 1:0,5 bis 2,7:0,75 bis 3, vorzugsweise 1:1 bis 1,8:0,87 bis 2.

Gemäss einer weiteren bevorzugten erfindungsgemässen Ausführungsform besitzen die verschäumbaren Granulatteilchen mindestens eine Auslassung (ein Loch), wobei sich diese Auslassung entweder in einem der Schenkel oder im Zentrum der Granulatteilchen befinden kann. Bevorzugt sind hier Teilchen, die in allen Schenkeln Auslassungen aufweisen; bevorzugt sind weiterhin solche Teilchen, bei denen sich die Auslassung nur im Zentrum befindet. Sofern die Auslassungen nur relativ klein sind und sich deren Grösse im unteren Teil der nachstehend genannten Bereiche bewegt, kann es in manchen Fällen günstig sein, neben den Auslassungen in den Schenkeln auch noch eine Auslassung im Zentrum der Granulatteilchen anzubringen.

Die Auslassungen haben vorzugsweise überwiegend runde bis ovale oder linsenförmige Form; jedoch sind grundsätzlich auch andere Formgebungen, wie Vielecke, beispielsweise Dreiecke, Vierecke, Sechsecke etc. möglich. Die Grösse dieser Auslassungen ist im allgemeinen so bemessen, dass deren Fläche etwa 25 % bis etwa 75 %, vorzugsweise 30 % bis 60 % beträgt, bezogen auf die jeweilige Schenkelfläche bzw. auf die Gesamtfläche bei nur einer Auslassung im Zentrum. Der Durchmesser bzw. die grösste lichte Weite dieser Auslassungen liegt zumeist bei 0,2 bis 2,0 mm, vorzugsweise 0,3 bis 1,5 mm.

Als Kunststoffe für die erfindungsgemässen Teilchen eignen sich die üblicherweise für Packmaterialien verwendeten Thermoplaste, wie z.B. Styrolpolymerisate, Polyolefine wie Polyäthylen, Vinylchlorid-Polymerisate und dergleichen. Bevorzugt wird Polystyrol eingesetzt.

Die Herstellung dieses verschäumbaren, treibmittelhaltigen, kompakten Kunststoffgranulats erfolgt in bekannter Weise durch Aufschmelzen des Kunststoffes in einer Strangpresse, Eindosieren eines geeigneten Treibmittels unter Druck in die Kunststoffschmelze, Auspressen der treibmittelhaltigen Schmelze durch eine entsprechende sternförmige (kleeblattähnliche) Formöffnung und anschliessendes Granulieren. Um ein Aufschäumen bei der Extrusion zu verhindern, werden die aus der Strangpresse austretenden Stränge rasch, zweckmässigerweise durch ein Wasserbad, abgekühlt. Die Länge der günstigsten Wasserbadstrecke und die Abzugsgeschwindigkeit der Stränge lassen sich für den Fachmann leicht durch einige wenige Routineversuche ermitteln. Anschliessend werden die gekühlten Stränge senkrecht zur Abzugsrichtung in Teilchen der oben angegebenen Dicke geschnitten. Die Strangtemperatur sollte dabei zweckmässigerweise so gewählt werden, dass der Anteil an Staub und Splittern beim Schneiden möglichst gering ist.

Falls Auslassungen in den Packmaterialteilchen erwünscht sind, ist diese Formöffnung mit Formkernen (Dornen) versehen, deren Form und Anzahl denen der gewünschten Auslassungen entspricht.

Die so entstandenen expandierbaren Teilchen können durch Erwärmen über ihren Erweichungspunkt, z.B. durch Wasserdampf, zu den erfindungsgemässen Packmaterialkörpern aufgeschäumt werden. Üblicherweise wird diese Verschäumung erst beim Verbraucher ausgeführt. Anstelle eines physikalischen Treibmittels kann dem Kunststoff auch vor der Extrusion ein chemisches Treibmittel, das beim Erwärmen Gase, z.B. Wasserdampf, Kohlensäure oder Stickstoff abspaltet, eingemischt werden.

Das so erhaltene Packmaterial besteht überwiegend, vorzugsweise zu mehr als 90 % und insbesondere zu mehr als 95 % aus Teilchen der oben beschriebenen Form, wobei von drei Schenkeln zwei Schenkelflächen paraboloid gegeneinander gekrümmt sind, während der dritte Schenkel eine dazu entgegengesetzte paraboloide Krümmung seiner Fläche

Die Wanddicke der Teilchen des erfindungsgemäßen Packmaterials beträgt 3 bis 6 mm, wobei die Wanddicke im Zentrum des Teilchens am größten ist und zu den Randbereichen abfällt.

Die Maße (A'),(B') und (C') der dreischenkeligen Teilchen (vgl. Figuren 3 bis 5) betragen 20 bis 38 mm (A'), 17 bis 30 mm (B') und 12 bis 18 mm (C'). Der Winkel $\alpha'$ zwischen den Schenkeln 2 und 4 (Fig. 3) bewegt sich zweckmäßigerweise zwischen 30 und 130°,vorzugsweise 60 und 100°, während der Winkel $\beta'$ zwischen den Schenkeln 3' und 2'/4' (Figur 4) zumeist zwischen 0 und 150°, Vorzugsweise zwischen 30 und 120° und insbesondere 60 bis 100° liegt.

Im allgemeinen beträgt Verhältnis von (D') zu (A') 1:4 bis 1:12,7, das Verhältnis von (D') zu (B') 1:3,4 bis 1:10, das Verhältnis (D') zu (C') 1:2,4 bis 1:6, das Verhältnis (C') zu (A') 1:0,8 bis 1:5, vorzugsweise 1:1,1 bis 1:3,16, das Verhältnis (C') zu (B') 1:0,8 bis 1:5, vorzugsweise 1:0,94 bis 1:2,5, das Verhältnis (B') zu (A') 1:0,4 bis 1:2,5, vorzugsweise 1:0,67 bis 1:2,2 und das Verhältnis (C'):(B'):(A') 1:0,8 bis 5:0,4 bis 2,5, vorzugsweise 1:0,94 bis 2,5:0,67 bis 2,2.

Die Auslassungen in den Packmaterialteilchen sind - entsprechend denen in den Granulatteilchen - vorzugsweise rund, oval und/oder linsenförmig und finden sich vorzugsweise auf allen Schenkeln oder nur das Zentrum weist vorzugsweise eine Auslassung auf. Die Fläche dieser Auslassung(en) beträgt in der Regel etwa 25 % bis etwa 75 %, vorzugsweise 33 % bis 63 %, bezogen auf die jeweiligen Schenkelflächen bzw. auf die Gesamtfläche. Der Durchmesser bzw. die größte lichte Weite dieser Auslassungen liegt zumeist bei 3 bis 15 mm,, vorzugsweise 6 bis 12 mm. Entsprechend den Granulatteilchen kann auch bei den Packmaterialteilchen deren Zentrum gegebenenfalls auch noch eine Auslassung aufweisen. Grundsätzlich ist die Größe der Auslassungen in den packmaterialteilchen, wie auch in den Granulatteilchen, nicht kritisch und kann größere oder kleinere Werte als die vorstehend angegebenen Prozentzahlen einnehmen, dann jedoch unter Inkaufnahme gewisser Nachteile.

Die Oberfläche der Packmaterialteilchen enthält je nach Aufschäumgrad etc. eine mehr oder weniger große Zahl von Aufbrüchen (Kratern), die durch das entweichende Treibmittel entstanden sind.

Das Hohlraumvolumen der ungerüttelten Schüttung des erfindungsgemäßen Packmaterials (bestimmt nach der weiter unten beschriebenen Meßmethode) beträgt im allgemeinen mehr als 60 %, Vorzugsweise 65 bis 90 %, insbesondere 65 bis 80 %.

Durch die verwölbte Gestalt der erfindungsgemäßen Packmaterialkörper wird nicht nur ein besonders großes Hohlraumvolumen der Schüttung gebildet, sondern darüberhinaus ergibt sich durch die paraboloid (U-förmig) verkrümmten Schenkel und durch die erfindungsgemäß bevorzugten Auslassungen ein elastisches Verformungsverhalten der Teilchen, ohne daß eine bleibende Deformation oder gar eine Zerstörung der Schaumstruktur eintritt.

Das erfindungsgemäße Packmaterial kann die üblichen Zusatzstoffe wie Flammschutzmittel, UV- und

4

Wärmestabilisatoren, Farbstoffe und äußerlich aufzubringende Ausrüstungsmittel in den üblichen Mengen enthalten.

Die Erfindung wird anhand der Zeichnungen näher erläutert. Die Figuren 1 und 2 stellen dabei ein verschäumbares dreischenkeliges Granulatteilchen in starker Vergrößerung dar, während die Figuren 3 bis 5 das daraus durch Verschäumen gewonnene Teilchen des erfindungsgemäßen Packmaterials betreffen. Die Figuren 6 bis 10 beziehen sich auf die betreffenden Teilchen mit Auslassungen.

In Figur 1, die eine Ansicht eines erfindungsgemäßen Granulatteilchens (1) zeigt, bedeuten (2), (3) und (4) die drei Schenkel des Teilchens. (A) und (B) geben die Maße des Teilchens in zwei Raumrichtungen wieder. α stellt den Winkel zwischen den beiden Schenkeln (2) und (4) dar.

Figur 2 zeigt das Teilchen (1) der Figur 1 in der Seitenansicht. (D) bedeutet darin die Wanddicke, (c) ein weiteres Maß des Teilchens und β den Winkel zwischen den Schenkeln (3) und (2)/(4).

Figur 3 stellt ein Teilchen (1') des erfindungsgemäßen Verpackungsmaterials dar, das durch Verschäumen des Granulatteilchens (1) der Figur 1 entstanden ist. (2'), (3') und (4') bedeuten wiederum die drei Schenkel, während (A') und (B') die Masse dieses Teilchens in zwei Raumrichtungen ausdrücken. α' gibt den Winkel zwischen den beiden Schenkeln (2') und (4') wieder.

Die Figur 4 stellt das Teilchen (1') der Figur 3 in der Seitenansicht dar. (D') bedeutet darin die Wanddicke, (C') ein weiteres Mass des Teilchens (1') und (β') den Winkel zwischen den Schenkeln (3') und (2')/(4').

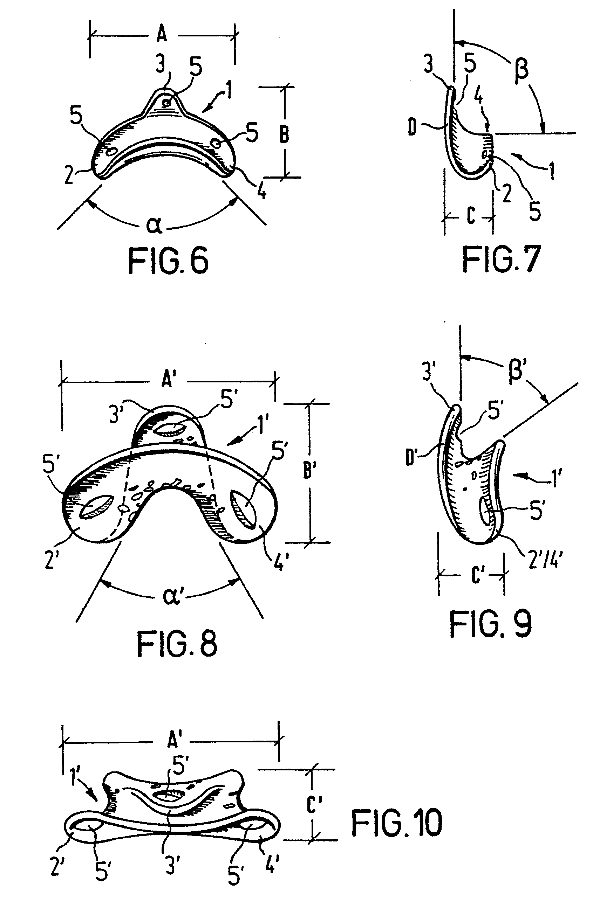

Die Figur 5 ergibt sich aus Figur 3 durch Kippen des Teilchens (1') nach vorne um 90°.

In den Figuren 6 bis 10 bedeuten (5) bzw. (5') die Auslassungen.

Beispiele

Das Packverhalten von geschäumten Kunststoffteilchen wird im wesentlichen bestimmt durch die Schüttdichte, das Hohlraumvolumen und die Rieselfähigkeit. Eine Zusätzlich wichtige Aussage gibt der Zylinderfalltest.

In der folgenden Tabelle 1 sind diese das Packverhalten bestimmende Werte des erfindungsgemässen Packmaterials denen des Packmaterials gemäss der DE-Offenlegungsschrift 2.848.338 gegenübergestellt.

Die Prüfungen wurden folgendermassen durchgeführt und sind in der Tabelle 1 zusammengefasst:

1. Ermittlung der Schüttdichtezunahme der Schüttung durch Rütteln

Ein Messbecher mit 10 Liter Inhalt und den Abmessungen D = 189 mm φ und H = 357 mm wurde unter Zuhilfenahme eines Testtrichters mit Packmittelteilchen im freien Fall gefüllt. Der Testtrichter bestand aus Metallblech mit glatter Oberfläche, besass im Auslauf einen Schieber und hatte folgende Abmessungen:

```
großer Durchmesser              850 mm ± 5 mm
kleiner Durchmesser             150 mm ± 5 mm
Neigungswinkel                   45°    ± 1°
Gesamthöhe mit Auslauf          700 mm ± 5 mm
Höhe Auslauf                    305 mm
Abstand Schieber - Auslaufende   25 mm ± 2 mm
Dicke Schieber                  1,6 mm
```

Ein derartiger Testtrichter ist beispielsweise beschrieben in "Technische Lieferbedingungen TL 8135-0032, Ausgabe 2 (März 1982)", S. 1 bis 6 des Bundesamtes für Wehrtechnik und Beschaffung der BR-Deutschland.

Danach wurde die Oberkante des Meßbechers mit einem Lineal abgestrichen. Das Nettogewicht dividiert durch 10 ergab die Schüttdichte der ungerüttelten Schüttung in Gramm je Liter.

2. Ermittlung der Schüttdichte der gerüttelten Schüttung:

Der unter 1) beschriebene Meßbecher wurde unter Zuhilfenahme des ebenfalls unter 1) beschriebenen Testtrichters mit Packmittelteilchen im freien Fall gefüllt. Während des Füllvorganges wurde der Meßbecher ständig in kurzen Abständen so lange auf einer massiven Unterlage aufgestoßen, bis keine weitere Volumenkontraktion der Schüttung mehr erfolgte. Danach wurde der Meßbecher mit einem Lineal abgestrichen. Das Nettogewicht dividiert durch 10 ergab die Schüttdichte der gerüttelten Schüttung in Gramm je Liter.

3. Ermittlung der Verdichtung der Schüttung durch Rütteln (Rüttelverdichtung):

Die Verdichtung der Schüttung durch Rütteln ergab sich aus dem Quotienten
(Schüttdichte gerüttelte Schüttung - Schüttdichte ungerüttelte Schüttung) . 100/Schüttdichte ungerüttelte Schüttung
in den vorliegenden Fällen zu:

$$\frac{[6,4 \ (6,0) \ g/l - 5,6 \ (5,4) \ g/l] \cdot 100}{5,6 \ (5,4) \ g/l} = 14,28 \ (11,11) \ \%$$

4. Ermittlung ds Hohlraumvolumens der ungerüttelten Schüttung.

Der obige Meßbecher wurde wie unter 1) geschildert mit Packmittelteilchen gefüllt. Nach dem Überstreichen der Meßbecheroberkante mit einem Lineal wurde der Meßbecher mit einem Drahtsieb verschlossen. Dann wurde der Meßbecher unter Wasser getaucht und allseitig so gedreht, daß sich alle Hohlräume der Schüttung mit Wasser füllten. Das zum Füllen der Hohlräume erforderliche Wasservolumen entsprach dem Hohlraumvolumen der ungerüttelten Schüttung.

5. Ermittlung des Hohlraumvolumens der gerüttelten Schüttung.

Der besagte Meßbecher wurde, wie unter 2) aufgeführt, gefüllt und bis zur dichtesten Teilchenpackung gerüttelt. Danach wurde der Meßbecher unter Wasser getaucht und allseitig so gedreht, daß sich alle Hohlräume mit Wasser füllten. Das zum Füllen der Hohlräume erforderliche Wasservolumen entsprach dem Hohlraumvolumen der gerüttelten Schüttung.

6. Ermittlung der Rieselzeit (Fließverhalten):

Dieser Versuch wurde fünfmal durchgeführt. Die Schaumstoffteilchen wurden dabei bis zur Gewichtskonstanz auf Normklima 23/50-2 DIN 50 014 klimatisiert. Der Auslauf des unter 1) beschriebenen Trichters wurde durch den Schieber verschlossen und mit dem zu prüfenden Material bis zum Rand gefüllt. Anschließend wurde der Schieber herausgezogen und die Zeit bis zum vollständigen Auslaufen gemessen.

7. Ermittlung der Eindringtiefe beim Zylinderfalltest:

Die hierzu benutzte Versuchsanordnung ist beschrieben in der Firmenbroschüre der HOECHST AG "(R)Hostastar" (Ausgabe September 1981). Ein 1,65 kg schwerer Stahlzylinder (Durchmesser 44 mm, Länge 140 mm) wurde aus 1 m Höhe in einen mit Packmittelteilchen gefüllten und kurz angerüttelten Behälter (Durchmesser oben: 420 mm; Durchmesser unten: 360 mm; Füllhöhe: 370 mm) fallengelassen.
Der mit waagerechter Längsachse auftretende Zylinder bewirkte lediglich eine kurzfristige Deformation der Packmittelteilchenschüttung und sprang dann vom Niveau der Füllhöhe gedämpft zurück. Erst beim zweiten Auftreffen auf die Schüttung drang der Stahlzylinder geringfügig in die Schüttung ein, blieb aber in dieser Position fixiert (Tabelle 1, Packmaterial I) bzw. drang überhaupt nicht in die Schüttung ein und blieb an der Oberfläche fixiert (Packmaterial II). Der Abstand vom Niveau der Füllhöhe bis zur eingedrungenen unteren Metallinie des Stahlzylinders wird als Eindringtiefe in cm angegeben.

8. Zurückfedern des Zylinders von der Oberfläche der Schüttung.

EP 0 144 961 B1

Mit diesem Beurteilungskriterium lassen sich die Pack- und Fixiereigenschaften von Packmittelschüttungen gut differenzieren. Erfolgt keine Rückfederung beim ersten Auftreffen des Stahlzylinders auf die Schüttung, so ist stets die Eindringtiefe größer als bei Packmittelschüttungen, die aufgrund ihrer guten Verhakungs- und Polstereigenschaften den Stahlzylinder zur Rückfederung zwingen und nur sehr geringe Eindringtiefen beim zweiten bzw. dritten Aufprall auf die Schüttung der aus der Rückfederung resultiert, zulassen.

Tabelle 1:

| | | Dimension | I | II | A |
|---|---|---|---|---|---|
| 1 | Schüttdichte ungerüttelte Schüttung | g/l | 5,6 | 5,4 | 7,2 |
| 2 | Schüttdichte der gerüttelten Schüttung | g/l | 6,4 | 6,0 | 8,0 |
| 3 | Schüttdichtezunahme der Schüttung durch Rütteln | % | 14,3 | 11,11 | 11,1 |
| 4 | Hohlraumvolumen der ungerüttelten Schüttung | % | 67 | 69 | 49 |
| 5 | Hohlraumvolumen der gerüttelten Schüttung | % | 64,5 | 66 | 44,8 |
| 6 | Rieselzeit | sec | 14 | 15 | 12 |
| 7 | Eindringtiefe Zylinderfalltest | cm | 3 | 0 | 4 |
| 8 | Zurückfedern des Zylinders von der Oberfl. der Schüttung | ja/nein | ja | ja | ja |

I = erfindungsgemässes Packmaterial (dreischenkelig, ohne Auslassungen; A' = 20 bis 38 mm; B' = 17 bis 30 mm; C' = 12 bis 18 mm; $\alpha'$ ca. zwischen 60 und 100°, $\beta'$ ca. zwischen 30 und 220°)

II = erfindungsgemässes Packmaterial (wie bei I, jedoch mit ovalen bis linsenförmigen Auslassungen auf allen drei Schenkeln; lichte Weite dieser Auslassungen ca. 30 % bis 60 % der jeweiligen Schenkelfläche).

A = Packmaterial gemäss DE-Offenlegungsschrift 2.848.338.

Aus der Tabelle 1 geht hervor, dass die erfindungsgemässen Packmittelteilchen I/II in Schüttdichte, Hohlraumvolumen, Zylinderfalltest und Eindringtiefe den Teilchen A überlegen sind. Die Rieselzeit liegt noch immer weit unter dem Höchstwert von 40 sec, der in den oben zitierten "Technischen Lieferbedingungen" angegeben ist, und entspricht etwa dem Wert der Vergleichsteilchen.

**Patentansprüche**

1. Kunststoffgranulat aus verschäumbaren Teilchen in Sternform, dadurch gekennzeichnet, dass das Kunststoffgranulat überwiegend aus Teilchen besteht, die sich von einem sternförmigen Grundkörper mit drei Schenkeln ableiten, wobei zwei Schenkelflächen paraboloid gegeneinander gekrümmt sind, während der dritte Schenkel eine dazu entgegengesetzte paraboloide Krümmung seiner Fläche aufweist, wodurch ein räumlich in sich verwölbtes Gebilde entsteht, dessen paraboloide Krümmungsflächen zueinander versetzt stehen, dass die Wanddicke (D) der Teilchen 1,0 bis 2,5 mm beträgt, dass die Teilchenbreite (Mass A) bis 10 mm, die Teilchenhöhe (Mass B) 5 bis 7 mm und die Teilchedicke

7

(Mass C) 4 bis 5 mm betragen, und dass
das Verhältnis von (D) zu (A), 1:4 bis 1:10,
das Verhältnis von (D) zu (B), 1:2,5 bis 1:7
und das Verhältnis von (D) zu (C) 1:2 bis 1:5 beträgt

2. Kunststoffgranulat nach Anspruch 1, dadurch gekennzeichnet, dass die verschäumbaren Teilchen mindestens eine Auslassung aufweisen.

3. Kunststoffgranulat nach Anspruch 1 oder 2, dadurch gekennzeichnet, dass mindestens einer der Schenkel oder das Zentrum der Teilchen eine Auslassung aufweisen.

4. Kunststoffgranulat nach Anspruch 2 oder 3, dadurch gekennzeichnet, dass die Auslassung rund bis oval und/oder linsenförmig gestaltet ist.

5. Kunststoffgranulat nach einem oder mehreren der Ansprüche 1 bis 4, dadurch gekennzeichnet, dass die Fläche der Auslassung 25 % bis 75 % der jeweiligen Schenkelfläche beträgt.

6. Packmaterial aus geschäumten, in sich verwölbten Kunststoffteilchen, mit ein Wanddicke (D') der Teilchen von 3 bis 6 mm erhalten durch Verschäumen des Kunststoffgranulats gemäss einem oder mehreren der Ansprüche 1 bis 5.

7. Packmaterial nach Anspruch 6, dadurch gekennzeichnet, dass die Teilchen mindestens eine Auslassung aufweisen.

8. Packmaterial nach Anspruch 6 oder 7, dadurch gekennzeichnet, dass mindestens einer der Schenkel oder das Zentrum der Teilchen eine Auslassung aufweisen.

9. Packmaterial nach einem oder mehreren der Ansprüche 6 bis 8 dadurch gekennzeichnet, dass die Teilchenbreite (Mass A') 20 bis 38 mm, dass die Teilchenhöhe (Mass B') 17 bis 20 mm und die Teilchendiche (Mass C') 12 bis 18mm betragen.
und dass
das Verhältnis von (D') zu (A') 1:4 bis 1:2.7,
das Verhältnis von (D') zu (B') 1:3,4 1:10
und das Verhältnis von (D') zu (C') 1:2,4 bis 1:6 beträgt

10. Packmaterial nach einem oder mehreren der Ansprüche 6 bis 9, dadurch gekennzeichnet, dass bei der Schüttung zum Haufwerk das Hohlraumvolumen der ungerüttelten Schüttung mindestens 60 % beträgt.

11. Packmaterial nach einem oder mehreren der Ansprüche 6 bis 9, 10 dadurch gekennzeichnet, dass die Teilchen aus Polystyrol bestehen und mit einem an sich üblichen Treibmittel aufgeschäumt wurden.

## Claims

1. Plastics granular material of foamable star-shaped particles, characterized in that the plastics granular material predominantly consists of particles which are derived from a star-shaped basic body with three limbs, with the surfaces of two of said limbs paraboloidally curved relative to one another while the third limb has a paraboloidal curvature of its surface in the opposite direction, whereby a structure spatially curved in on itself is produced whose paraboloidal curvature surfaces are offset in relation to one another, that the particle wall thickness (D) measures 1.0 to 2.5 mm, the particle width (dimension A) measures 8 to 10 mm, the particle height (dimension B) measures 5 to 7 mm and the particle thickness (dimension C) measures 4 to 5 mm, and that the ratio of (D) to (A) is 1:4 to 1:10, the ratio of (D) to (B) is 1:2.5 to 1:7 and the ratio of (D) to (C) is 1:2 to 1:5.

2. Plastics granular material as claimed in claim 1, characterized in that the foamable particles have at least one orifice.

3. Plastics granular material as claimed in claims 1 or 2, characterized in that at least one of the limbs or the centre of the particles has an orifice.

4. Plastics granular material as claimed in claims 2 or 3, characterized in that the orifice is of round to oval and/or lenticular shape.

5. Plastics granular material as claimed in one or more of claims 1 to 4, characterized in that the area of the orifice is 25% to 75% of the respective limb area.

6. Packaging material of foamed plastics particles curved in on themselves with a particle wall thickness (D') of 3 to 6 mm, obtained by foaming the plastics granular material as claimed in one or more of claims 1 to 5.

7. Packaging material as claimed in claim 6, characterized in that the particles have at least one orifice.

8. Packaging material as claimed in claims 6 or 7, characterized in that at least one of the limbs or the centre of the particles has an orifice.

9. Packaging material as claimed in one or more of claims 6 to 8, characterized in that the particle width (dimension A') measures 20 to 38 mm, the particle height (dimension B') measures 17 to 30 mm and the particle thickness (dimension C') measures 12 to 18 mm, and that the ratio of (D') to (A') is 1:4 to 1:12.7, the ratio of (D') to (B') is 1:3.4 to 1:10 and the ratio of (D') to (C') is 1:2.4 to 1:6.

10. Packaging material as claimed in one or more of claims 6 to 9, characterized in that, when poured out into a loose heap, the void volume of the unvibrated fill is at least 60%.

11. Packaging material as claimed in one or more of claims 6 to 10, characterized in that the particles consist of polystyrene and were expanded with a blowing agent usual per se.

**Revendications**

1. Granulé de matière synthétique composé de particules moussables en forme d'étoile, caractérisé en ce que le granulé de matière synthétique se compose surtout de particules qui dérivent d'un corps de base en forme d'étoile à trois branches, où deux surfaces de branches sont courbées en paraboloïdes l'une vis-à-vis de l'autre, tandis que la troisième branche présente une courbure paraboloïde de sa surface qui y est opposée, ce qui fait apparaître une forme qui se voûte sur elle-même dans l'espace, et dont les surfaces de courbure paraboloïdes sont décalées l'une par rapport à l'autre, de manière que l'épaisseur de paroi (D) des particules s'élève à 1,0 à 2,5 mm, que la largeur des particules (dimension A) s'élève à 8 à 10 mm, la hauteur des particules (dimension B) à 5 à 7 mm et la profondeur des particules (dimension C) à 4 à 5 mm, et que le rapport de (D) à (A) s'élève à 1:4 à 1:10, le rapport de (D) à (B), de 1:2,5 à 1:7, et le rapport de (D) à (C) , à 1:2 à 1:5.

2. Granulé de matière synthétique selon la revendication 1, caractérisé en ce que les particules moussables présentent au moins un évidement.

3. Granule de matière synthétique selon la revendication 1 ou 2, caractérisé en ce qu'au moins une des branches ou le centre des particules présente un évidement.

4. Granulé de matière synthétique selon la revendication 2 ou 3, caractérisé en ce que l'évidement est de forme ronde à ovale et/ou en lentille.

5. Granulé de matière synthétique selon une ou plusieurs des revendications 1 à 4, caractérisé en ce que la surface de l'évident s'élève à 25% à 75% de la surface de la branche intéressée.

6. Matériau d'emballage fait de particules synthétiques moussables recourbées sur elles-même, avec une épaisseur de paroi des particules (D') allant de 3 à 6 mm, obtenu par moussage du granulé de matière synthétique selon une ou plusieurs des revendications 1 à 5.

7. Matériau d'emballage selon la revendication 6, caractérisé en ce que les particules présentent au moins un évidement.

9

**8.** Matériau d'emballage selon la revendication 6 ou 7, caractérisé en ce qu'au moins une des branches ou le centre des particules présente un évidement.

**9.** Matériau d'emballage selon une ou plusieurs des revendications 6 à 8, caractérisé en ce que la largeur des particules (dimension A') s'élève à 20 à 38 mm, en ce que la hauteur des particules (dimension B') s'élèe à 17 à 30 mm et en ce que la profondeur des particules (dimension C') s'élève à 12 à 18 mm, et en ce que le rapport de (D') à (A') s'élève de 1:4 à 1:12.7. le rapport de (D') à (B'), de 1:3.4 à 1:10 et ;e rapport de (D') à (C'), à 1:2,4 à 1:6.

**10.** Matériau d'emballage selon une ou plusieurs des revendications 6 à 9, caractérisé en ce que dans une répartition pour constituer un remblai le volume d'espace creux de la distribution non agitée s'élève au moins à 60%.

**11.** Matériau d'emballage selon une ou plusieurs des revendications 6 à 10, caractérisé en ce que les particules se composent de polystyrène et sont moussées avec un carburant habituel.

FIG. 1

FIG. 2

FIG. 3

FIG. 4

FIG. 5

FIG.6

FIG.7

FIG.8

FIG.9

FIG.10